# EUROPEAN PATENT APPLICATION

(11) **EP 3 603 961 A1**
(43) Date of publication of application: **05.02.2020**
(21) Application number: 18776111.9
(22) Date of filing: 22.03.2018
(51) Int. Cl.: B32B 27/08, B32B 25/08, B32B 27/00, B32B 27/32, B65D 65/40

(54) **MULTILAYER FILM AND PACKAGE**

(30) Priority: 30.03.2017 JP 2017066577
(71) Applicant: Sumitomo Bakelite Co., Ltd., Shinagawa-ku Tokyo 140-0002 (JP)
(72) Inventor: KAI, Hideki, Tokyo 140-0002 (JP)
(74) Representative: Ter Meer Steinmeister & Partner
(86) International application number: PCT/JP2018/011336
(87) International publication number: WO 2018/180858

(57) **Abstract**

A multilayer film, including: a barrier layer in which an unstretched first film layer containing a first resin, and an unstretched second film layer containing a second resin different from the first resin are alternately and repeatedly laminated; a pair of unstretched first outer layers sandwiching the barrier layer; and a pair of unstretched second outer layers sandwiching the pair of unstretched first outer layers, wherein the average thickness per layer of the first film layers is 10 to 1,000 nm, and the lamination number of the first film layers in the barrier layer is in the range of 50 to 5,000.

## Description

### TECHNICAL FIELD

The present invention relates to a multilayer film and a package.

Priority is claimed on Japanese Patent Application No. 2017-066577, filed on March 30, 2017, the content of which is incorporated herein by reference.

### BACKGROUND ART

It is common that foods, pharmaceutical products, and the like are packaged, at the time of sale, with packages such as packaging bags and packaging containers. For such packages, various performances are required for protection of the contents, and the like. Therefore, in some of the packages, multilayer films that are prepared by compositization (multilayering) have been used.

The multilayer film used in packages is required to have impact resistance and gas barrier properties in order to impart functions such as protection of the contents of the package. For example, in Patent Document 1, as a means for improving the impact resistance and gas barrier properties, a method of orienting crystals in a multilayer film by stretching the multilayer film which is formed from a polymer material is disclosed.

### Citation List

### Patent Literature

[PTL 1] Japanese Unexamined Patent Application, First Publication No. 2007-283569

### DISCLOSURE OF INVENTION

### Technical Problem

However, in the multilayer film disclosed in Patent Document 1, since crystals in the multilayer film are oriented, the multilayer film has excellent impact resistance and gas barrier properties, there is a problem in that the formability, the anti-and anti-curling property of the film as a whole are inferior.

The present invention was made in view of the above circumstances, and provides a multilayer film having improved moldability, corner splitting-preventing property, and anti-curling property, and a package using this multilayer film.

### Solution to Problem

In order to solve the above problems, the present invention employs the following configurations.
[1]. A multilayer film, including: a barrier layer in which an unstretched first film layer containing a first resin, and an unstretched second film layer containing a second resin different from the first resin are alternately and repeatedly laminated; a pair of unstretched first outer layers sandwiching the barrier layer; and a pair of unstretched second outer layers sandwiching the pair of unstretched first outer layers, in which the average thickness per layer of the first film layers is 10 to 1,000 nm, and the lamination number of the first film layers in the barrier layer is in the range of 50 to 5,000.
[2]. The multilayer film according to [1], in which both the first outer layers are resin layers containing the first resin and an elastomer.
[3]. The multilayer film according to [1] or [2], in which both the second outer layers are resin layers containing the first resin.
[4]. The multilayer film according to any one of [1] to [3], in which the thickness of the barrier layer is in the range of 10 to 500 µm.
[5]. The multilayer film according to any one of [1] to [4], in which the total thickness of the pair of unstretched first outer layers is in the range of 5 to 125 µm.
[6]. The multilayer film according to any one of [1] to [5], in which the total thickness of the pair of unstretched second outer layers is in the range of 5 to 125 µm.
[7]. The multilayer film according to any one of [2] to [6], in which the elastomer is an olefin-based elastomer.
[8]. The multilayer film according to any one of [1] to [7], in which the first resin and the second resin are polyolefin-based resins.
[9]. The multilayer film according to any one of [1] to [8], in which the first resin is polypropylene.
[10]. The multilayer film according to any one of [1] to [9], in which the second resin is high-density polyethylene.
[11]. The multilayer film according to any one of [1] to [10], in which the average thickness per layer of the first film layers is less than 500 nm.
[12]. The multilayer film according to any one of [1] to [11], in which the lamination number of the first film layer in the barrier layers is in the range of 200 to 5,000.
[13]. A package, including the multilayer film according to any one of [1] to [12].

### Advantageous Effects of Invention

Since the multilayer film of the present invention includes a barrier layer containing a crystalline resin, and first outer layers and second outer layers containing an elastomer, and has a structure in which a first outer layer is laminated on both sides of the barrier layer, and a second outer layer is laminated on both surfaces of the first outer layer, the film as a whole has excellent moldability, corner splitting-preventing property, and anti-curling property.

Also, since the package of the present invention includes the multilayer film, the package has excellent moldability, corner splitting-preventing property, and anti-curling property.

### BRIEF DESCRIPTION OF DRAWINGS

FIG. 1 is a cross-sectional view schematically illustrating an embodiment of the multilayer film of the present invention.
FIG. 2 is a perspective view schematically illustrating an embodiment of the package of the present invention.
FIG. 3 is a cross-sectional view taken along line I-I of the package shown in FIG. 2.
FIG. 4 is a cross-sectional view schematically illustrating another embodiment of the package of the present invention.

### BEST MODE FOR CARRYING OUT THE INVENTION

Hereinafter, a multilayer film, which is an embodiment according to the present invention, and a package using this will be described in detail. The drawings used in the following description may show an enlarged view of a featured portion for convenience, for easy understanding of the features, and the dimensional ratios and the like of various constituent elements are not restricted to be the same as the actual ratios and the like.

### «Multilayer film»

The multilayer film of the present embodiment is a multilayer film including a barrier layer in which an unstretched first film layer containing a first resin, and an unstretched second film layer containing a second resin different from the first resin are alternately and repeatedly laminated; a pair of unstretched first outer layers sandwiching the barrier layer; and a pair of unstretched second outer layers sandwiching the pair of unstretched first layers, in which the average thickness per layer of the first film layer is 10 to 1,000 nm, and the lamination number of the first film layers in the barrier layer is in the range of 50 to 5,000.

First, the configuration of the multilayer film 1 of the present embodiment will be described.

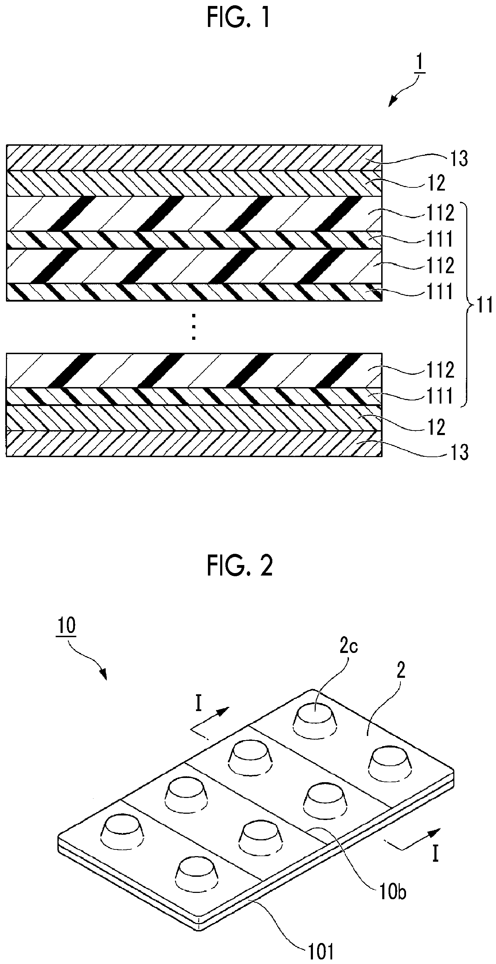

FIG. 1 is a schematic cross-sectional view of the multilayer film 1 of the present embodiment. As shown in FIG. 1, the multilayer film 1 of the present embodiment includes a barrier layer 11; a pair of unstretched first outer layers 12 sandwiching the barrier layer; and a pair of unstretched second outer layers 13 sandwiching the pair of unstretched first outer layers. Thus, the film as a whole has excellent moldability, corner splitting-preventing property, and anti-curling property.

The term "corner splitting-preventing property" as used in the present specification means, unless particularly stated otherwise, the impact resistance of the corners of the package, and for example, in the case of the package whose planar shape is a rectangle, the term means the impact resistance of the four corners of this package.

Furthermore, the term "anti-curling property" as used in the present specification means, unless particularly stated otherwise, the warpage resistance of the edges of the package, and for example, in the case of a package whose planar shape is a rectangle, the term means the warpage resistance of the four corners of the package.

### <Barrier layer>

In regard to the multilayer film 1 of the present embodiment, the barrier layer 11 has a configuration in which an unstretched first film layer 111 containing a first resin, and an unstretched second film layer 112 containing a second resin different from the first resin are alternately and repeatedly laminated. By alternately and repeatedly laminating film layers containing different resins, it is possible to improve the rigidity of the barrier layer. As a result, the film as a whole has excellent anti-curling property. Further, by alternately and repeatedly laminating film layers containing different resins, it is also possible to improve the impact resistance of the barrier layer. As a result, the film as a whole has excellent corner splitting-preventing property.

Furthermore, because crystals are oriented without being accompanied by a stretching process during manufacture, the gas barrier properties and moldability are excellent.

### <First film layer>

The first film layer 111 is laminated alternately with the second film layer 112 that will be described later, and imparts excellent gas barrier properties and moldability to the multilayer film 1. The first film layer 111 is an unstretched film layer and contains a first resin.

The first film layer 111 may contain only the first resin (that is, may be formed from a first resin), or may contain a first resin and a component other than the first resin (that is, may be formed from a first resin and a component other than the first resin).

The content of the first resin in the first film layer 111 is preferably in the range of 60% to 100% by mass, more preferably in the range of 80% to 100% by mass, and even more preferably in the range of 90% to 100% by mass. When the content of the first resin in the first film layer 111 is in the range of 60% to 100% by mass, the first resin assists orientation of crystals constituting the resin of the second film layer 112 that will be described later, and can contribute to exhibition of high barrier properties.

As the first resin, the crystalline resin can be mentioned, and specific examples include polyolefin resins such as polyethylene, polypropylene, and polymethylpentene; polyamide resin such as nylon 6 and nylon 66; polyester resins such as polyethylene terephthalate, polybutylene terephthalate, polybutylene succinate, and polyethylene-2,6-naphthalate; polyacetal resins; polylactic acid resins; polyglycolic acid resins; polycaprolactone resins; and copolymer resins containing monomers that form the resins. The first resin can be used singly or in combination of two or more of them.

Among these, the first resin is preferably a polyolefin resin. Since polyolefin resins are softer than other materials, for example, in the case of providing a tablet storage portion that protrudes in the thickness direction, the tablet storage portion can be sufficiently pressed in under a low load, and tablets can be easily taken out. Further, since it is not necessary to use a halogen such as fluorine or chlorine, it is advantageous in that the multilayer film is environmentally friendly.

Among the polyolefin resins of the first resin, polypropylene is preferred. Since polypropylene is a general-purpose resin among polyolefin resins, cost reduction is possible. Further, the barrier layer 11 can be imparted with higher heat resistance and moldability.

The first resin included in the first film layer 111 may be only one kind or may include two or more kinds, and in a case in which two or more kinds are used, the combination and ratio of these can be arbitrarily selected according to the purpose.

The component other than the first resin, which is included in the first film layer 111, may be a resin component or may be a non-resin component; however, in a case in which the component is a resin component, it is also preferable that the resin component be a resin other than the second resin.

Among the components other than the first resin, examples of the non-resin component include additives that are known in the art.

As the additives, examples include antioxidants, antistatic agents, crystal nucleating agents, inorganic particles, organic particles, viscosity-reducing agents, thickeners, heat stabilizers, lubricants, infrared absorbers, and ultraviolet absorbers.

The component other than the first resin, which is included in the first film layer 111, may be only one kind or may include two or more kinds, and in a case in which two or more kinds are used, the combination and ratio of these can be arbitrarily selected according to the purpose.

The lamination number of the first film layers 111 in the barrier layer 11 is 50 to 5,000, preferably 200 to 5,000, and more preferably 250 to 4,500, and for example, the lamination number may be any of 300 to 4,000, 450 to 3,500, 600 to 3,000, 750 to 2,500, and 750 to 2,000.

The number of layers of the first film layer 111 can be checked by, for example, cutting the multilayer film 1 using a microtome, and observing a cross-section of the multilayer film 1 produced by this cutting, using an electron microscope. Further, from the method for manufacturing a multilayer film that will be described later, it is possible to calculate the number of layers of the first film layer, without observing a cross section.

The average thickness per layer of the first film layer 111 is 10 to 1,000 nm, preferably less than 500 nm, more preferably 10 nm or more and less than 500 nm, still preferably from 10 to 490 nm, particularly preferably from 10 to 400 nm, and most preferably 15 to 300 nm. For example, the average thickness per layer may be any of 15 to 250 nm, 15 to 200 nm, 15 to 150 nm, or 15 to 120 nm.

Here, the "average thickness per layer of the first film layer 111" means the value obtained by dividing the sum of the thickness values of all of the first film layers 111 present in the barrier layer 11 by the number of layers of the first film layer 111 present in the barrier layer 11 ([sum of thickness values of all of first film layers 111 present in barrier layer 11] / [number of layers of first film layer 111 present in barrier layer 11]).

### <Second film layer>

The second film layer 112 is an unstretched film layer and includes a second resin of a type different from the first resin.

The second film layer 112 may include only the second resin (that is, may also be formed from the second resin), and may include the second resin and a component other than the second resin (that is, may be composed of the second resin and a component other than the second resin).

The content of the second resin in the second film layer 112 is preferably in the range of 60% to 100% by mass, more preferably in the range of 80% to 100% by mass, and even more preferably in the range of 90% to 100% by mass. When the content of the second resin in the second film layer 112 is in the range of 60% to 100% by mass, crystals constituting the resin are oriented in a particular direction, and high barrier properties can be exhibited.

The second resin may be a crystalline resin, and specific examples include polyolefin resins such as a polyethylene resin, a polypropylene resin (PP resin), and a polymethylpentene resin; polyamide-based resins such as a nylon 6 resin and a nylon 66 resin; polyester-based resins such as a polyethylene terephthalate resin, a polybutylene terephthalate resin, a polybutylene succinate resin, and a polyethylene-2,6-naphthalate resin; polyacetal resins; polylactic acid resins; polyglycolic acid resins; polycaprolactone resins; and copolymer resins containing monomers that form the above-mentioned resins. These can be used singly or in combination of two or more kinds thereof.

Among these, the second resin is preferably a polyolefin-based resin. Since polyolefin-based resins are softer than other materials, for example, in a case in which a tablet storage portion that protrudes in the thickness direction is provided, the tablet storage portion can be sufficiently pushed in under a small load, and tablets can be taken out easily. Furthermore, since it is not necessary to use a halogen such as fluorine or chlorine, it is advantageous in that the second resin is environmentally friendly.

Among the polyolefin-based resins of the second resin, polyethylene is preferable, and high-density polyethylene (HDPE) is more preferable. Polyethylene is a general-purpose resin among polyolefin-based resins. Therefore, cost reduction is possible. Furthermore, higher barrier properties can be exhibited by orienting polyethylene.

The second resin contained in the second film layer 112 may be only one kind or may be two or more kinds, and in a case in which two or more kinds of the second resin are used, the combination and ratio thereof can be arbitrarily selected according to the purpose.

The component other than the second resin, which is included in the second film layer 112, may be a resin component or may be a non-resin component; however, in the case of a resin component, it is preferable that the resin be other than the first resin.

Among the components other than the second resin, examples of the non-resin component include additives as a component other than the first resin.

The component other than the second resin, which is included in the second film layer 112, may be only one kind or may be two or more kinds, and in a case in which two or more kinds are used, combinations and ratios thereof can be arbitrarily selected according to the purpose.

The lamination number of the second film layer 112 in the barrier layer 11 is preferably 50 to 5,000, more preferably 200 to 5,000, and even more preferably 250 to 4,500, and for example, the lamination number may be any of 300 to 4,000, 450 to 3,500, 600 to 3,000, 750 to 2,500, or 750 to 2,000.

The number of layers of the second film layer 112 can be checked by the same method as that used in the case of the number of layers of the first film layer 111 described above.

In the barrier layer 11, the number of layers of the first film layer 111 and the number of layers of the second film layer 112 may be the same, or may be different by 1 (the number of layers of the first film layer 111 may be larger by only one than the number of layers of the second film layer 112, or the number of layers of the second film layer 112 may be larger by only one than the number of layers of the first film layer 111).

For example, the number of layers of the barrier layer 11 is preferably 100 to 10,000.

The average thickness per layer of the second film layer 112 is preferably 10 to 1,000 nm, more preferably less than 500 nm, even more preferably 10 nm or more and less than 500 nm, still more preferably 10 to 490 nm, particularly preferably 10 to 400 nm, and most preferably 15 to 300 nm. The average thickness per layer may be, for example, any one of 15 to 250 nm, 15 to 200 nm, 15 to 150 nm, or 15 to 120 nm.

Here, the "average thickness per layer of the second film layer 112" means the value obtained by dividing the sum of the thickness values of all of the second film layers 112 present in the barrier layer 11 by the number of layers of the second film layer 112 present in the barrier layer 11 ([sum of thickness values of all of second film layers 112 present in barrier layer 11] / [number of layers of second film layer 112 present in barrier layer 11]).

The combination of the first resin and the second resin used in combination in the multilayer film 1 is preferably a polyolefin-based resin and a polyolefin-based resin. Such a combination may be, for example, a combination of polypropylene and high-density polyethylene.

The thickness of the barrier layer 11, in other words, the sum of the sum value of the thicknesses of the first film layers 111 and the sum value of the thicknesses of the second film layers 112 is preferably 10 to 500 µm, more preferably 15 to 400 µm, even more preferably 20 to 350 µm, and particularly preferably 25 to 300 µm. As the thickness of the barrier layer is 10 to 500 µm, crystals constituting the resin are oriented in a particular direction, and high barrier properties can be exhibited.

It is speculated that the corner splitting-preventing property is affected by both the thickness of the barrier layer 11, and the number of layers of the first film layers and second film layers constituting the barrier layer 11. That is, by increasing the thickness of the barrier layer 11, it is possible to improve the impact resistance of the barrier layer. Thereby, the corner splitting prevention property can be improved. Alternatively, by increasing the number of layers of the first film layers and the second film layers in the barrier layer 11 (in other words, reducing the average thickness per layer of the first film layer 111 and the second film layer 112), it is possible to improve the impact resistance of the barrier layer. Thereby, the corner splitting prevention property can be improved.

Furthermore, it is speculated that the anti-curling property is affected by both the thickness of the barrier layer 11, and the number of layers of the first film layers and the second film layers constituting the barrier layer 11. That is, by increasing the thickness of the barrier layer 11, it is possible to improve the rigidity of the barrier layer, and it is possible to improve the anti-curling property. Alternatively, by increasing the number of layers of the first film layers and the second film layers in the barrier layer 11 (in other words, reducing the average thickness per layer of the first film layer 111 and the second film layer 112), it is possible to improve the rigidity of the barrier layer, and it is possible to improve the anti-curling property.

Since the barrier layer 11 has low water vapor permeability, the multilayer film 1 exhibits excellent water vapor barrier properties, even in a case in which a stretching process is not carried out at the time of manufacture of the multilayer film. This is speculated to be because, since the first resin is oriented in a direction parallel to the surface of the first film layer 111 in the first film layer 111, and the second resin is oriented in a direction parallel to the second film layer 112 in the second film layer 112, in order for water vapor to respectively permeate through the first film layers 111 and the second film layers 112, it is necessary for water vapor to pass through long pathways in the first film layers 111 and the second film layers 112.

### <First outer layer>

It is preferable that the first outer layers 12 be all resin layers containing the first resin and an elastomer.

The first outer layer 12 is laminated on both sides of the barrier layer 11. In the multilayer film 1, the barrier layer 11 is protected by a pair of these resin layers. The first outer layers 12 impart excellent flexibility to the multilayer film 1. As a result, the film as a whole has excellent corner splitting-preventing property.

Examples of the elastomer include an olefin-based elastomer, an α-olefin copolymer, and low-density polyethylene. Among these, it is preferable that the elastomer be an olefin-based elastomer. Thus, the flexibility of the first outer layer can be dramatically improved, and it is also possible to maintain or improve transparency.

Specific examples of the olefin-based elastomer include NOTIO SN0285 manufactured by Mitsui Chemicals Corporation. Specific examples of the α-olefin copolymer include TAFMER XM7080 manufactured by Mitsui Chemicals, Inc.

The content of the elastomer in the first outer layer 12 is, for example, preferably 20% by mass or more, and more preferably 60% by mass or more, with respect to the first outer layer 12. Thus, excellent flexibility can be imparted to the multilayer film 1.

The total thickness of a pair of unstretched first outer layers 12 is preferably in the range of 5 to 125 µm, more preferably in the range of 10 to 125 µm, and even more preferably in the range of 20 to 125 µm. Thus, excellent flexibility can be imparted to the multilayer film 1.

### <Second outer layer>

The second outer layer 13 is laminated on both surfaces of the first outer layer 12. The second outer layer 13 imparts heat resistance and moldability to the multilayer film 1.

The second outer layers 13 are preferably both a resin layer containing the first resin. Thus, excellent heat resistance and moldability can be imparted to the multilayer film 1.

The content of the polyolefin-based resin in the second outer layer 13 is, for example, preferably 60% by mass or more, and more preferably 80% by mass or more, with respect to the second outer layer 13. Thus, excellent heat resistance and moldability can be imparted to the multilayer film 1.

The total thickness of a pair of unstretched second outer layers 13 is preferably in the range of 5 to 125 µm, more preferably in the range of 10 to 110 µm, and even more preferably in the range of 15 to 100 µm. Thus, excellent heat resistance and moldability can be imparted to the multilayer film 1.

The total thickness of the multilayer film is preferably in the range of 20 to 750 µm, more preferably in the range of 50 to 600 µm, and even more preferably in the range of 100 to 500 µm. As the total thickness of the multilayer film 1 is less than or equal to the above-mentioned upper limit, it is possible to form a tablet storage portion of the package. Furthermore, as the total thickness of the multilayer film 1 is more than or equal to the above-mentioned lower limit, it is possible to impart barrier properties for the purpose of protecting the contents.

### <Other layers>

The multilayer film 1 may include another layer in addition to the barrier layer 11, the first outer layer 12, and the second outer layer 13, to the extent that the effects of the present invention are not impaired. The other layer is not particularly limited and can be arbitrarily selected according to the purpose.

However, in the multilayer film 1, for example, as shown in FIG. 1, it is preferable that the first outer layer 12 be provided in direct contact with the barrier layer 11, and it is preferable that the second outer layer 13 be provided in direct contact with the first outer layer 12.

### «Method for manufacturing multilayer film»

The multilayer film of the present invention can be manufactured, for example, by the following method.

That is, first, in order to finally form a laminated structure of a first film layer 111 and a second film layer 112, a first laminated film of a multilayer structure is produced. The first laminated film is configured such that, more specifically, a first resin-containing layer that finally becomes an unstretched first film layer 111, and a second resin-containing layer that finally becomes an unstretched second film layer 112 are laminated alternately and repeatedly. As the first laminated film, for example, a laminated film having a multilayer structure in which the two outermost layers are both a first resin-containing layer, and the number of layers of the second resin-containing layer is only 1 smaller than the number of layers of the first resin-containing layer; or conversely, a laminated film having a multilayer structure in which the two outermost layers are both a second resin-containing layer, and the number of layers of the first resin-containing layer is only 1 smaller than the number of layers of the second resin-containing layer, may be mentioned. However, the first laminated film is not limited to these.

Next, this first laminated film is cut in a direction perpendicular to the surface of the film, and then two sheets of the first laminated film thus obtained are further laminated in the thickness direction of these to produce a second laminated film.

Next, this second laminated film is expanded by stretching in a direction parallel to the surface of the film, and then this second laminated film after expansion is cut and laminated in the same manner as in the case of the first laminated film to produce a third laminated film.

Thereafter, expansion, cutting, and lamination of such a laminated film are carried out repeatedly. Thus a barrier layer 11 is produced. For example, in a case in which a laminated film in which the two outermost layers are both a first resin-containing layer is used as the first laminated film, the first resin-containing layer of the two outermost layers thus superposed at the time of producing the second laminated film by laminating the first laminated films apparently forms one first resin-containing layer in the second laminated film. This also applies similarly during the production of laminated films after the second laminated film and the barrier layer 11. However, the barrier layer 11 shown here is only an example of the multilayer film 1 of the present invention.

The first laminated film can be produced by, for example, a feed block method in which a raw material resin or the like is melt-extruded using a number of extruders; a co-extrusion T-die method such as a multi-manifold method; or an air-cooled or water-cooled co-extrusion inflation method.

In the manufacturing method described above, the subsequent production from this first laminated film to the barrier layer of interest can be performed using a multiplier.

Next, for example, the constituent components of the first outer layer 12, such as an elastomer and the first resin, are dry-blended or melt-kneaded, the resin in a molten state is melt-extruded into another feed block using a number of extruders different from the above-described extruders, and a film is formed. The film thus formed is used as the first outer layer 12.

Next, the first outer layer 12 is laminated on both sides of the barrier layer 11 described above.

Next, for example, the constituent components of the second outer layer 13, such as the first resin, are melted, the resin in a molten state is melt-extruded into another feed block using a number of extruders different from the above-described extruders, and a film is formed. The film thus formed is used as a second outer layer 13.

Next, the second outer layer 13 is laminated on the surface (exposed surface) of the pair of the first outer layers 12 described above.

Next, the laminated film is cooled and solidified using a cooling roll, thereby the crystal orientation of the laminated film is controlled, and a multilayer film 1 is produced.

The multilayer film 1 produced according to this embodiment has excellent molding processability because the film is not stretched.

### «Package»

The package of the present invention includes the multilayer film of the present invention described above.

The package of the present invention has excellent moisture resistance because the multilayer film of the present invention having excellent moisture-proofing property is used.

Furthermore, in this multilayer film, a specimen in which corner splitting is suppressed as described above and curling is suppressed can be produced, and the package of the present invention can realize excellent corner splitting-preventing property and anti-curling property because such a multilayer film is used.

The package of the present invention is suitable for use in various applications where moisture-proofing property, satisfactory moldability, corner splitting-preventing property, and anti-curling property are required, and is suitable as, for example, a packaging bag or a packaging container for packaging food, pharmaceutical products, and the like.

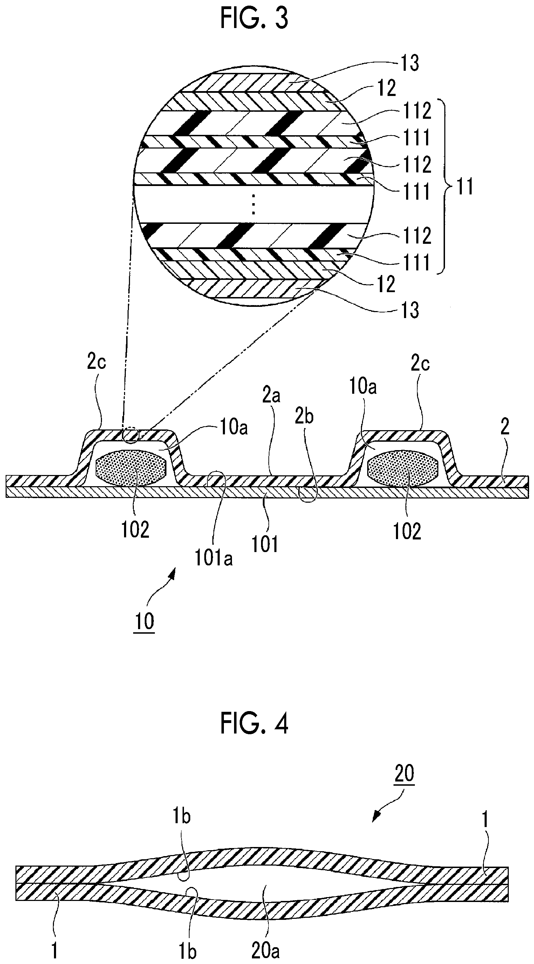

FIG. 2 is a perspective view schematically illustrating an embodiment of the package of the present invention, and FIG. 3 is a cross-sectional view taken along line I-I of the package shown in FIG. 2.

In FIG. 2 and subsequent figures, the same constituent elements as those shown in a diagram that has already been explained will be assigned with the same reference symbols as those used in the diagram that has been explained, and further detailed description thereof will not be repeated.

The package 10 shown herein is configured to include a molded film 2 and a cover film 101. In the molded film 2, a protruding portion 2c constituting an accommodation part 10a of the package 10 is formed. The molded film 2 is a molded body of the above-mentioned multilayer film (for example, the multilayer film 1 shown in FIG. 1).

The package 10 is a PTP film (packaging container) as a blister pack, and tablets 102 can be sealed and accommodated in the accommodation part 10a.

One surface (in the present specification, may be referred to as "second surface") 2b of the molded film 2 is adhered to one surface (in the present specification, may be referred to as "first surface") 101a of the cover film 101. However, the molded film 2 protrudes, in some region, toward the surface of the other side (in the present specification, may be referred to as "first surface") 2a, and the second surface 2b in this protrusion 2c is not adhered to the first surface 101a of the cover film 101, while the accommodation part 10a is formed by the second surface 2b of the molded film 2 and the first surface 101a of the cover film 101.

As the material for the cover film 101, for example, aluminum may be mentioned.

A slit 10b is formed in the molded film 2 and the cover film 101. The slit 10b is an optional configuration and may not be necessarily formed; however, as a slit 10b is formed, since the package 10 can be easily partitioned to the particular number of accommodations of tablets 102 in the accommodation part 10a, convenient usability of the package 10 is improved.

Here, as the package 10, it is shown that the external shape of the accommodation part 10a is a truncated conical shape; however, the external shape of the accommodation part 10a is not limited to this and can be arbitrarily selected according to the shape of the tablet 102, which is an object of accommodation. For example, the external shape of the accommodation part 10a may be a polygonal shape such as a triangle, a rectangle, a pentagon, or a hexagon in a case in which the package 10 is viewed in a planar view so as to look down from the molded film 2 side, or may be an elliptical shape or the like.

In addition, it is shown here that the package 10 includes eight accommodation parts 10a; however, the number of the accommodation parts 10a is not limited to this and may be one, or two or more (provided that the case of eight is excluded).

FIG. 4 is a cross-sectional view schematically illustrating another embodiment of the package of the present invention.

The package 20 shown here is configured such that a portion between the second surfaces 1b and 1b of a pair of the multilayer films 1 and 1, more specifically, between regions near the peripheral edge, are adhered. As such, in the package 20, accommodation parts 20a are formed as regions near the peripheral edge of a pair of multilayer films are adhered. In the accommodation parts 20a, an object of storage of interest (not depicted in the diagram) is accommodated.

The package 20 is suitable for accommodating, for example, foodstuffs such as meat, processed meat, vegetables, and fruits; and medical instruments such as needles, syringes, test kits, and catheters, in the accommodation part 20a.

### «Method for manufacturing package»

The package of the present invention can be manufactured using the multilayer film by bonding multilayer films with each other, or bonding a multilayer film with another film or the like, so as to form the accommodation parts of interest.

For example, the package 10 shown in FIGS. 2 and 3 can be produced using a known PTP packaging machine.

More specifically, first, a molded film 2 is produced by forming protrusions in the multilayer film 1 by vacuum molding, pressure forming, plug molding, or the like.

Next, after the protruding portions 2c of the molded film 2 are filled with tablets 102, which are objects to be stored, the cover film 101 is superposed with the multilayer film 1, and the molded film 2 is adhered to the cover film 101.

Next, if necessary, slits 10b are formed in the molded film 2 and the cover film 101, using a machine blade, a half-cut blade, or the like.

Thus, the package 10 is obtained.

On the other hand, the package 20 shown in FIG. 4 can be produced, for example, by adhering between regions near the peripheral edge of the multilayer film 1 so as to form an accommodation part 20a.

Adhesion between the multilayer films 1 can be carried out by, for example, applying various known laminating methods.

### EXAMPLES

Hereinafter, the present invention will be described in more detail by way of specific Examples. However, the invention is not intended to be limited to the following Examples.

### <Production of multilayer film>

### [Example 1]

Polypropylene (manufactured by Prime Polymer Co., Ltd., "E122V", may be referred to as PP) was prepared as a first resin, and high-density polyethylene (manufactured by Prime Polymer Co., Ltd., "3300F", may be referred to as HDPE) was prepared as a second resin. Using an extruder (manufactured by Sun NT Co., Ltd., "Model No. SNT40-28"), the first resin and the second resin were each brought into a molten state at 250°C, and using feed blocks, a molten laminate of five layers (above-mentioned first laminated film) was produced having a configuration in which a polypropylene layer that would finally become an unstretched first film layer, and a high-density polyethylene layer that would finally become an unstretched second film layer were alternately and repeatedly laminated, in which two outermost layers were both a polypropylene layer, and the laminate further included three layers of the polypropylene layer and two layers of the high-density polyethylene layer.

Next, the five-layered molten laminate thus obtained was cut into two sheets using a multiplier, these two sheets of molten laminate after cutting were further laminated. Thereby, a molten laminate of nine layers (above-mentioned second laminated film) was produced.

Next, the nine-layered molten laminate thus obtained was expanded by stretching in a direction parallel to the surface of the laminate, subsequently this nine-layered molten laminate after expansion was cut and laminated by the same method as that in the case of the five-layered molten laminate (first laminated film). Thereby, a molten laminate of 17 layers (above-mentioned third laminated film) was produced.

Thereafter, expansion, cutting and lamination of the molten laminate were repeatedly performed by a similar procedure. Thus a barrier layer of 2049 layers was produced having a configuration in which an unstretched first film layer and an unstretched second film layer were alternately and repeatedly laminated, the barrier layer being composed of 1025 layers of the first film layer and 1024 layers of the second film layer.

Next, the olefin-based elastomer (manufactured by Mitsui Chemicals, Inc. "NOTIO SN-0285"), and the same first resin as that used for producing the barrier layer were subjected to dry blending or melt kneading, the resin in a molten state was melt-extruded into separate feed blocks using a number of extruders different from those described above, and a film (first outer layer) containing an olefin-based elastomer and polypropylene was formed.

Next, the same first resin as that used for the production of the barrier layer was melted, the resin in a molten state was melt-extruded into separate feed blocks using a number of extruders different from those described above, and a film containing polypropylene (second outer layer) was formed.

Next, a molten laminate of 2053 layers was produced by laminating the first outer layer obtained as described above on both sides of the barrier layer of 2049 layers, and further laminating the second outer layer obtained as described above on both sides of the resulting laminate. Further, a multilayer film of Example 1 having the structure shown in FIG. 1 was produced by co-extruding this molten laminate using a die.

The thickness of the multilayer film thus obtained was 335 µm, and within that, the thickness of the sum of the first outer layers was 45 µm, the thickness of the sum of the second outer layers was 38 µm, and the thickness of the barrier layer was 252 µm.

That is, the number of layers of the first film layer was 1025, and the average thickness per layer of the first film layer was 100 nm. Further, the number of layers of the second film layer was 1024, and the average thickness per layer of the second film layer was 150 nm.

### [Comparative Example 1]

Polyvinyl chloride ("S-1008" manufactured by Kaneka Corporation; may be referred to as PVC) and polychlorotrifluoroethylene ("ACLAR" manufactured by Honeywell International, Inc.; may be referred to as PCTFE) were subjected to co-extrusion molding in this order. Thereby, a multilayer film of Comparative Example 1 was produced.

The thickness of the multilayer film having a two-layer structure thus obtained was 223 µm, and within this, the thickness of the polyvinyl chloride layer was 200 µm, and the thickness of the polychlorotrifluoroethylene layer was 23 µm.

### [Comparative Example 2]

Polyvinyl chloride and polychlorotrifluoroethylene were subjected to co-extrusion molding in this order. Thereby, a multilayer film of Comparative Example 2 was produced.

The thickness of the multilayer film thus obtained was 301 µm, and within this, the thickness of the polyvinyl chloride layer was 250 µm, and the thickness of the polychlorotrifluoroethylene layer was 51 µm.

### <Production of single-layer film>

### [Comparative Example 3]

A single-layer film formed from an unstretched polyvinyl chloride layer as a single-layer structure was produced by extrusion molding polyvinyl chloride.

The thickness of the single-layer film thus obtained was 250 µm.

### [Comparative Example 4]

Polypropylene ("E122V" manufactured by Prime Polymer Co., Ltd.; may be referred to as PP) was extrusion molded. Thereby, an unstretched single-layer film formed from polypropylene having a single-layer structure was produced.

The thickness of the single-layer film thus obtained was 300 µm.

### <Evaluation of the multilayer film and single-layer film>

For the multilayer films and single-layer films obtained as described above, evaluation of the following items was carried out by the following methods. The results are shown in Table 1. The description of the symbol "-" in the column for the evaluation results in Table 1 means that the item was not evaluated.

### (Moldability)

Moldability of packages including the multilayer films produced in various Examples and various Comparative Examples was evaluated. Specifically, first, in each of the multilayer films of various Examples and Comparative Examples, ten tablet accommodation parts in total (ϕ10.0 mm × 4.5 mm) were formed using a blister packaging machine (manufactured by CKD Corporation, "FBP-300E") such that five tablet accommodation parts were arranged in the longitudinal direction and two accommodation parts were in each row in the lateral direction. The following criteria that: the thickness (thinnest layer) of the tablet accommodation parts was 80 µm or more, the tablet accommodation parts were free of whitening (a phenomenon in which the side portions of the tablet accommodation parts are forcibly stretched and are partially whitened), and the depth of the tablet accommodation parts is 4.5 mm or more, were defined as the criteria for determination of the possibility for molding, and a molding temperature range that satisfied these criteria was designated as a moldable temperature width.

### (Corner splitting-preventing property)

The multilayer film having ten tablet accommodation parts (ϕ10.0 mm × 4.5 mm) in total as described previously was punched so as to have a rectangular planar shape having a size of 40 mm × 95 mm. Thereby, a first test sheet was produced. Ten sheets of the first test sheet were superposed such that the tablet accommodation parts would be alternately arranged, and were fixed with a tape. Thus a first specimen was produced. The first specimen was fixed on a horizontal surface such that the face having the tablet accommodation parts of the first specimen would be perpendicular to the horizontal surface, and one side of the first specimen and the horizontal surface would form an angle of 45°. A drop test of dropping a plastic weight having a mass of 90 g from a height of 1 m from above was performed against a corner of the first specimen facing upward on the horizontal surface, and was carried out for all of the four corners of the first specimen. The number of samples of the first specimen was 5. That is, the number of the first test sheets was set to 50 pieces in total. Corners of 50 pieces × 4 angles = 200 sites were checked, and the number of corners (pieces) of any first test sheets where splitting had occurred was measured in an environment at normal temperature. In a case in which the number of split corners was smaller, the specimen was evaluated to have satisfactory corner splitting-preventing property.

The term "splitting" according to the present specification means, unless stated otherwise, damage accompanied by generation of a new cross-section, such as generation of a break or chipping, occurs in the first specimen after the drop test, and does not mean that folding occurs.

### (Anti-curling property)

The multilayer film having ten tablet accommodation parts (ϕ10.0 mm × 4.5 mm) in total as described previously was punched so as to have a rectangular planar shape having a size of 40 mm × 95 mm. Thereby, a second test sheet was produced.

In an environment at normal temperature, an aluminum film having a thickness of 17 µm was bonded on the surface on the opposite side of the protrusion side of the tablet accommodation parts of the second test sheet, and a second specimen was obtained. The tablet accommodation parts of the second specimen were arranged to face upward, and the second specimen was placed on a plane. The average value (mm) of the height of the four corners in the second specimen from the plane was measured. In a case in which the average value of the height from the plane was small, the specimen was evaluated to have satisfactory anti-curling property.

**[Table 1]**

| | Example 1 | Comparative Example 1 | Comparative Example 2 | Comparative Example 3 | Comparative Example 4 |
|---|---|---|---|---|---|
| Configuration of film | Multilayer of Second outer layer/ First outer layer/ 2049 layer PP/ HDPE barrier layer/ First outer layer/ Second outer layer | Two-layer of PVC layer/ PCTFE layer | Two-layer of PVC layer/ PCTFE layer | Single layer of PCV layer | Single layer of PP layer |
| Thickness of film (µm) | 335 | 223 | 301 | 250 | 300 |
| Molding temperature range (°C) | 128∼140 | 120∼150 | 134∼148 | 110∼140 | 136∼146 |
| Number of corner splitting occurrences (times) 200 sites in total | 2 | 3 | 2 | 18 | 35 |
| Average curl height at 4 corners (mm) | 2.5 | 1.3 | 0.8 | 0.6 | 6.1 |

Regarding moldability, the multilayer film of Example 1 exhibited a wider molding temperature range than the single-layer film of Comparative Example 4, which was the same polyolefin-based film.

Regarding the corner splitting-preventing property, the multilayer film of Example 1 exhibited a number of corner splitting occurrences that had been reduced equally to that of the hard multilayer films of Comparative Examples 1 and 2 containing fluorine. Furthermore, the multilayer film of Example 1 exhibited a number of corner splitting occurrences that had been reduced to a large extent compared to the single-layer films of Comparative Examples 3 and 4.

Regarding the anti-curling property, the multilayer film of Example 1 exhibited a reduced curl height compared to the single-layer film of Comparative Example 4.

### Industrial Applicability

The present invention can be utilized in packages used at the time of storage of food, pharmaceutical products, and the like.

### Reference Signs List

- 1: multilayer film
- 1b: second surface of multilayer film
- 2: molded film
- 2a: first surface of molded film
- 2b: second surface of molded film
- 2c: protrusion of molded film
- 11: barrier layer
- 111: first film layer
- 112: second film layer
- 12: first outer layer
- 13: second outer layer
- 10, 20: package
- 10a, 20a: accommodation part of package
- 10b: slit of package
- 101: cover film
- 101a: first surface of cover film
- 102: tablet

## Claims

1. A multilayer film, comprising:
a barrier layer in which an unstretched first film layer containing a first resin, and an unstretched second film layer containing a second resin different from the first resin are alternately and repeatedly laminated;
a pair of unstretched first outer layers sandwiching the barrier layer; and
a pair of unstretched second outer layers sandwiching the pair of unstretched first outer layers,
wherein an average thickness per layer of the first film layers is 10 to 1,000 nm, and
the lamination number of the first film layers in the barrier layer is in a range of 50 to 5,000.

2. The multilayer film according to Claim 1, wherein both the first outer layers are resin layers containing the first resin and an elastomer.

3. The multilayer film according to Claim 1 or 2, wherein both the second outer layers are resin layers containing the first resin.

4. The multilayer film according to any one of Claims 1 to 3, wherein a thickness of the barrier layer is in a range of 10 to 500 µm.

5. The multilayer film according to any one of Claims 1 to 4, wherein a total thickness of the pair of unstretched first outer layers is in a range of 5 to 125 µm.

6. The multilayer film according to any one of Claims 1 to 5, wherein a total thickness of the pair of unstretched second outer layers is in a range of 5 to 125 µm.

7. The multilayer film according to any one of Claims 2 to 6, wherein the elastomer is an olefin-based elastomer.

8. The multilayer film according to any one of Claims 1 to 7, wherein the first resin and the second resin are polyolefin-based resins.

9. The multilayer film according to any one of Claims 1 to 8, wherein the first resin is polypropylene.

10. The multilayer film according to any one of Claims 1 to 9, wherein the second resin is high-density polyethylene.

11. The multilayer film according to any one of Claims 1 to 10, wherein the average thickness per layer of the first film layers is less than 500 nm.

12. The multilayer film according to any one of Claims 1 to 11, wherein the lamination number of the first film layer in the barrier layers is in a range of 200 to 5,000.

13. A package, comprising the multilayer film according to any one of Claims 1 to 12.
